# EUROPEAN PATENT SPECIFICATION

(11) **EP 4 246 116 B1**
(45) Date of publication and mention of the grant of the patent: **19.11.2025**
(21) Application number: 22161967.9
(22) Date of filing: 14.03.2022
(51) Int. Cl.: G01M 5/00, G01N 19/04

(54) **TESTING APPARATUS**
TESTVORRICHTUNG
APPAREIL DE TEST

(43) Date of publication of application: 20.09.2023
(73) Proprietor: Siemens Gamesa Renewable Energy A/S, 7330 Brande (DK)
(72) Inventor: Bennani Kemmoun, Hicham, 9000 Aalborg (DK); Dekovic, Natasa, 9000 Aalborg (DK); Dircks, Stefan, 24976 Handewitt (DE)
(74) Representative: SGRE-Association

(56) References cited:
- US-A1- 2010 132 137
- US-A1- 2011 205 348
- US-A1- 2018 003 616
- US-B1- 7 028 555

## Description

### Background

Wind turbine rotor blades are generally exposed to harsh environmental conditions. During operation of the wind turbine, the rotor blades rotate and the leading edge of a rotor blade is susceptible to impact damage from hail, sand or other airborne particles. For this reason, the leading edge of a wind turbine rotor blade may be provided with a protective coating, or a "leading edge protector". This can be in the form of a moulded shell mounted to the rotor blade along its leading edge. The leading edge curves in a smooth manner from the pressure side to the suction side of a rotor blade, and an LEP shell is generally shaped to extend some distance into the pressure side and suction side. The underlying idea is that any airborne particles carried on the incoming airflow will only impact upon the LEP shell.

An LEP shell can be made of a rigid material, for example, and can be attached to the rotor blade using any appropriate means. It may be preferable to provide a wind turbine rotor blade with an LEP shell that has shock-absorbing properties, and which can be moulded into the required shape and glued or otherwise bonded to the rotor blade body. For example, a moulded LEP shell can be bonded to the rotor blade by a layer of epoxy adhesive.

The quality of the adhesive bond between rotor blade and LEP shell (the "adherent") is important, since it is usually preferable that the LEP does not detach during the lifetime of the rotor blade. Particularly in the outboard region towards the rotor blade tip, where the rotational velocity is greatest and impact damage can be significant, the quality of the adhesive bond is critical.

There are a number of ways of inspecting such an adhesive bond. For example, a technician may deploy an ultrasound device in an attempt to detect air pockets in the adhesive. Alternatively, air pockets may be detected using infrared imaging techniques. However, these methods cannot deliver any information regarding the strength of the adhesive bond.

It is known to test the strength of an adhesive bond using a "peel pull apparatus". For example, as proposed in US2018/0003616A1, the manufacturer of a product implementing an adhesive bond can provide a sample of the adherent and the adhesive. The adherent sample - for example a rectangular strip - is bonded to a solid carrier plate such as a metal plate. One end of the adherent sample is then pulled upwards to detach the adherent from the carrier plate. Such a test apparatus can provide useful information regarding the "resistance-to-peel strength" for that combination of adherent and adhesive. However, the known "resistance-to-peel" test devices or "peel-pull" devices require that the adherent sample be glued to a flat carrier plate of a certain size and shape, since the carrier plate must fit into a lateral displacement means that moves the carrier plate sideways at a constant rate while the adherent sample is being pulled upwards. These constraints of the conventional apparatus can be of benefit in the sense that they ensure consistent results, for example by using the same flat carrier plate each time, useful data can be collected concerning the behaviour of different adherent materials and/or different adhesives.

However, such conventional devices cannot be used to good effect to test the quality of the adhesive bond between an LEP shell and a wind turbine rotor blade. This is because the rotor blade body has very different material properties than a carrier plate of a conventional peel-test apparatus, so that the adhesive bond between the LEP shell adhesive and the rotor blade is different than the adhesive bond between the LEP shell adhesive and a carrier plate. Furthermore, no region of the leading edge is flat, i.e. the adhesive bond is always applied between one curved body (the rotor blade) and another curved body (the LEP). Furthermore, the thickness of the LEP may be non-uniform, and may - for example - be thickest at the junction between pressure side and suction side, and may taper gradually in the flap-wise direction. Similarly, the thickness of the adhesive bond between rotor blade and LEP may be non-uniform, and may - for example - become gradually thinner in the direction in the flap-wise direction towards the trailing edge. Similarly, the LEP may become thinner towards the rotor blade tip, so that the adhesive layer thickness may also be thinner in the more outboard regions of the rotor blade. In other words, material thicknesses and surface curvatures may be very different at the inboard and outboard ends of an LEP, so that the limitations of a conventional peel-pull test device make it unsuitable for assessing the quality of the adhesive bond between an LEP and a wind turbine rotor blade.

It is therefore an object of the invention to provide a way of assessing the quality of the adhesive bond between an LEP and a wind turbine rotor blade.

This object is achieved by the claimed testing apparatus and by the claimed method of performing a test procedure.

### Description

In the context of the invention, it shall be understood that the testing apparatus is for use in a wind turbine rotor blade manufacturing facility to carry out a peel test on an adherent previously bonded to a surface of the rotor blade. The peel test is carried out to inspect the quality of the adhesive bond between the adherent and the rotor blade surface.

According to the invention, the testing apparatus comprises a pulling means adapted to pull an adherent strip from a surface of a rotor blade; and a positioning arrangement configured to maintain a predetermined pull angle between the adherent strip and the surface of the rotor blade during a test procedure. The testing apparatus further comprises a support frame for holding the pulling means and positioning arrangement, and the support frame comprises a clamping arrangement adapted to clamp about the leading edge of the rotor blade.

An advantage of the inventive testing apparatus is that it can be used to obtain informative data regarding the quality of an adhesive bond between the rotor blade and an adherent previously bonded to the rotor blade. This type of inspection apparatus applies a "destructive testing" approach, since the adherent is deliberately removed from the rotor blade. It shall be understood that this type of test may be performed during an optimization stage of a manufacturing process, for example to ensure that an adhesive bonding procedure has been correctly planned and implemented before commencing series production. Equally, this type of test may be performed sporadically during quality checks after series production has commenced.

According to the invention, the method of performing a test procedure on a wind turbine rotor blade deploys the inventive testing apparatus and comprises steps of: arranging the support frame about the leading edge of the rotor blade and actuating the clamping arrangement to clamp about the leading edge of the rotor blade; attaching the pulling means to an edge of an adherent strip; and controlling the positioning arrangement to maintain the predetermined pull angle while actuating the pulling means to pull the adherent strip from the surface of the rotor blade.

An advantage of the inventive method is that it can be carried out "in situ" on the rotor blade. Instead of bonding a test strip of the adherent onto a metal carrier plate for use in a conventional peel-pull apparatus, a strip of the adherent is removed from the actual rotor blade. The information collected by the inventive method can therefore be significantly more useful than information obtained from a conventional test.

Particularly advantageous embodiments and features of the invention are given by the dependent claims, as revealed in the following description. Features of different claim categories may be combined as appropriate to give further embodiments not described herein.

In the following, the terms "testing apparatus", "test apparatus", "peel pull apparatus" and "resistance-to-peel test apparatus" may be used interchangeably.

The inventive testing apparatus can be deployed on a rotor blade that is held in any orientation, for example a rotor blade held horizontally in the span-wise direction, with its chord plane also in an essentially horizontal aspect. Equally, the inventive testing apparatus can be deployed on a rotor blade that is held horizontally, but with its chord plane in an essentially vertical aspect. In a particularly preferred embodiment of the invention, the testing apparatus is deployed on a rotor blade held thus, with its leading edge facing downwards. The rotor blade can be held at a suitable distance from the ground, so that the testing apparatus can be arranged about the leading edge.

In the following, without restricting the invention in any way, it may be assumed that the adherent is an LEP shell, previously bonded to the rotor blade by an adhesive layer. An LEP shell can be a "softshell", for example made of an elastomer such as a thermoplastic urethane. Such an LEP shell can be bonded to the rotor blade by a layer of adhesive as mentioned above. An LEP shell of this type may be pre-formed (e.g. by injection moulding) with a curved shape to match the curved leading edge of a rotor blade, and its long edges may taper to a minimum thickness in order to present a smooth surface when the LEP is bonded to the rotor blade. During the testing procedure discussed herein, a strip of the LEP shell is pulled from the surface of the rotor blade in order to test the quality of the adhesive layer.

In a preferred embodiment of the invention, the pulling means comprises a gripping means adapted to grip an edge of an adherent strip. In the following, the expressions "gripping means" and "gripper" may be used interchangeably. The positioning arrangement is preferably constructed to retract the gripper in a perpendicular direction relative to the rotor blade surface to pull the adherent strip from the rotor blade surface, while at the same time moving the gripper laterally. In a particularly preferred embodiment of the invention, the positioning arrangement is configured to maintain a predetermined pull angle of essentially 90° while pulling an adherent strip from the rotor blade. In other words, as the adherent strip is slowly pulled from the rotor blade surface, it is always held at an angle of 90° to the rotor blade surface. In this way, the peel-pull test is performed in a consistent manner, and the quality of information collected during the procedure is optimized.

In a preferred embodiment of the invention, the positioning arrangement comprises a lateral displacement means with which the pulling means can be displaced in a direction parallel to the rotor blade surface during a test procedure. Preferably, the lateral displacement means can be controlled at a constant rate.

In a preferred embodiment of the invention, the positioning arrangement comprises a perpendicular displacement means with which the pulling means can be displaced in a direction perpendicular to the rotor blade during the test procedure. Preferably, the perpendicular displacement means can be controlled at a constant rate.

In a further preferred embodiment of the invention, the testing apparatus is equipped with a distance sensor arrangement to measure a distance between the rotor blade surface and the pulling means during the test procedure. The distance sensor arrangement may comprise a number of time-of-flight (ToF) sensors, for example. These can be mounted at suitable reference positions on the support frame and/or the positioning means and/or the pulling means, as appropriate. The attitude of the positioning arrangement relative to the rotor blade surface can be determined by evaluating the measurements provided by the ToF sensors.

The testing apparatus is preferably also equipped with a load sensor configured to measure the force during pulling of the adherent strip during the peel-pull procedure. The load sensor can be a load cell such as a strain gauge load cell, a piezoelectric load cell, etc., and is preferably mounted in line with the gripper of the pulling means.

In a particularly preferred embodiment of the invention, the rate of perpendicular displacement and/or the rate of lateral displacement of the pulling means is adjusted on the basis of measurement data provided by the sensor arrangement.

In a preferred embodiment of the invention, the clamping arrangement comprises an actuatable jaw assembly adapted to fit about the rotor blade and to exert a clamping force against opposing surfaces of the rotor blade. For example, the clamping arrangement may comprise opposing parts that terminate in feet or pads which, when the clamping arrangement is closed, press against the two faces of the rotor blade. For example, the clamping arrangement can comprise a first structure terminating in pads that lie on the surface of the rotor blade's pressure side, and a second, opposing structure terminating in pads that lie on the surface of the rotor blade's suction side. Such pads or feet may be lined with a non-slip material. Equally, the pads may be realised as suction pads. The purpose of the pads or feet is to ensure that when the opposing structures of the clamping arrangement exert a clamping force on the rotor blade, the support frame of the test apparatus retains its position throughout a peel-pull procedure. The clamping force that can be applied by the actuatable jaw assembly depends on the resilience of the rotor blade structure, and the clamping force is chosen to avoid distortion or deformation of the rotor blade body.

The leading edge of the horizontally held rotor blade is generally not parallel to the ground. Instead, with increasing distance outwards from the root end, the height of the leading edge above ground may increase, reaching a maximum at the tip end. Therefore, the inventive testing apparatus is preferably equipped with a height adjustment means that can be actuated to raise or lower the support frame according to the height of the rotor blade leading edge.

The cross-sectional shape or "profile" of the rotor blade airfoil region alters gradually from the widest and thickest inboard region to the narrowest and flattest tip region. As a result, the curvature of leading edge changes in the span-wise direction of the rotor blade, and the curvature of the LEP changes accordingly. The leading edge in the outboard region is most susceptible to impact damage and erosion on account of the higher tip speeds, and the quality of the adhesive bond between rotor blade and LEP shell is most important in the more outboard region of the rotor blade. The inventive test apparatus allows the adhesive bond in this critical region to be thoroughly tested by collecting meaningful and informative data relating to the bond between LEP shell and rotor blade body.

In a preferred embodiment of the invention, the testing apparatus preferably comprises an attitude adjustment means for adjusting the attitude of the support frame according to the airfoil profile at that span-wise position of the rotor blade. For example, the test apparatus might comprise a tilting means to tilt the support frame in one or more directions. Preferably, the tilting means effects a tilting motion in at least two orthogonal axes. The tilting means can be arranged between the support frame and a carriage, for example.

The LEP of a rotor blade can extend over a fraction of the rotor blade length from the tip to an inboard region. For example, the LEP on an 80 m rotor blade may extend over 25% of the rotor blade length, so that the LEP has a length in the order of 20 m. An inspection procedure may involve pulling strips of the LEP from the rotor blade at various intervals, for example a test strip may be pulled from the tip region of the LEP shell, several test strips may be pulled from regions over the joint between pressure side and suction side, etc. Test strips may be spaced further apart in the more inboard region of the LEP; and closer together in the outboard region of the LEP.

The location of a test strip may be assigned at any angle relative to a long edge of an LEP shell. However, in a preferred embodiment of the inventive method, a test strip may lie parallel to the long edge of the LEP shell, i.e. the test strip extends in a span-wise direction. Alternatively, a test strip may be perpendicular to the long edge of the LEP shell, i.e. the test strip extends in a flap-wise direction.

The data collected by sensors of the testing apparatus can be recorded locally in a memory of the testing apparatus. To this end, the test apparatus may comprise a control unit with a data management module configured to record measurement data from any sensors of the sensor arrangement. The measurement results can be saved automatically on a local hard disc and can later be transferred to a remote location such as a cloud server. The testing apparatus may also comprise an imaging arrangement that records images or videos during each peel pull stage. The control unit may record various parameters such as time, gripper position, load measurements, ambient temperature, pulling angle etc. The testing apparatus may comprise a wireless interface for uploading such data or to provide remote access.

The step of controlling the positioning arrangement to maintain the predetermined pull angle preferably comprises a step of adjusting the rate of displacement in the direction parallel to the rotor blade surface. Similarly, the step of controlling the positioning arrangement to maintain the predetermined pull angle preferably comprises a step of adjusting the rate of displacement in the direction perpendicular to the rotor blade surface. The positioning arrangement is preferably controlled on the basis of data obtained by sensors of the sensor arrangement.

The inventive method preferably comprises a preparatory step of forming incisions about the perimeter of a strip of adherent that is to be pulled from the rotor blade surface. This step effectively delineates the strip that is to be pulled from the body of the rotor blade. One short edge of the rectangular test strip can be prised from the adhesive layer so that the resulting "free end" can be held by the gripper. Several such rectangular test strips can be marked in a preparatory step. As mentioned above, the quality of the adhesive bond near the long edge of an LEP shell may be of interest, since this is the region in which the LEP shell transitions from thickest to thinnest. Similarly, the quality of the adhesive bond in the outboard portion of the LEP shell may be of interest, since the leading edge is most prone to impact damage in the outboard region, in particular the tip region. The distribution of test strips can reflect this, with a fewer number of widely-spaced test strips in an inboard region, and a higher number of closely-spaced test strips in an outboard region.

In a particularly preferred embodiment of the invention, the dimensions of the test strip are in accordance with a standardized test method, for example ASTM D68862-11, which is a standard test method for testing the resistance-to-peel strength of an adhesive bond. This method can be applied to test the resistance-to-peel strength between the LEP shell and the adhesive applied to the rotor blade surface. To comply with ASTM D6862-11, a rectangular strip of a flexible adherent should be pulled at an angle of approximately 90°, and at a constant rate. As described above, a load sensor can measure the force that must be exerted in order to pull the test strip straight outward from the rotor blade body at that rate. When performed thus, the test method complies with the conditions of preparation and testing specified in ASTM D6862-11 and delivers measurement data quantifying the "90° peel resistance" of the adhesive bond between LEP shell and rotor blade body.

As indicated above, an LEP shell can be made of a material that has elastic properties. When a strip of this material is pulled, it may stretch noticeably. However, the aim of the inventive method is to obtain information regarding the adhesive bond that attaches the LEP shell to the rotor blade. Therefore, in a particularly preferred embodiment of the invention, before pulling the test strip from the rotor blade, a strip of inelastic material is attached to the adherent strip (3T). This strip is attached only to the adherent strip and does not extend beyond the bounding incisions. This inelastic material - for example a woven polyester mesh - ensures that the adherent strip does not undergo any significant elongation during the peel-pull step, so that all forces measured during the peel-pull procedure relate to the bonding strength of the underlying adhesive layer.

The rotor blade manufacturer can evaluate data collected during a test procedure. If the data indicates that a relatively large force is required to detach the test strips from the rotor blade, the manufacturer can be assured that the LEP mounting procedure is satisfactory. If the data indicates that one or more test strips can be detached using relatively little force, the manufacturer can analyse the LEP mounting procedure to identify stages that may require optimization.

Various stages of the method can be performed in an automated manner. To this end, the invention also describes a computer program product comprising a computer program that is directly loadable into a memory of a control unit of an embodiment of the inventive testing apparatus, with program elements for performing steps of the inventive method. For example, an operator may arrange the test apparatus at a suitable position, and actuate a tilting means of the support frame to adjust the aspect or attitude of the support frame according to the span-wise position along the rotor blade. The operator may then actuate the clamping means to clamp the support frame in place, and insert the free end of an incised test strip into the gripper of the pulling means.

The remainder of the test procedure is then performed in an automatic manner. For example, the test apparatus control unit can perform a sequence comprising the steps of: actuating the gripper to grip the free end of the test strip; actuating the pulling means to exert a pulling force on the test strip; maintaining the predetermined pull angle by controlling the positioning means to adjust the rate of displacement in the direction parallel to the rotor blade surface and/or in the direction perpendicular to the rotor blade surface; and sensing the tensile force measured by a load sensor of the pulling means. The procedure can be terminated when a sudden drop in tensile force is sensed, at which point the test strip is completely detached from the rotor blade body. The operator can then move the test apparatus into position to repeat the procedure on the next test strip.

After detaching the test strips from one side of the rotor blade, the test apparatus can be arranged on the other side of the rotor blade to detach multiple test strips from the LEP shell on that side also. Of course, the test apparatus could be modified to duplicate the pulling means and positioning means, so that test strips can be simultaneously detached from the pressure side and suction side.

Of course, with appropriate adaptations of the testing apparatus, the manual steps described above could equally well be automated so that an inspection procedure to pull multiple test strips from an LEP could be carried out in an essentially completely automated manner.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a series of outlines to illustrate the progression in shape of a wind turbine rotor blade;
Figure 2 illustrates the relevance of the rotor blade shape for a resistance-to-peel test;
Figure 3 is a simplified schematic of an exemplary embodiment of the inventive test apparatus;
Figure 4 illustrates a preparatory stage of the inventive method;
Figure 5 illustrates a stage of the inventive method;
Figure 6 shows an embodiment of the inventive test apparatus 1 in place underneath the leading edge of a wind turbine rotor blade;
Figure 7 is a flowchart showing steps of an embodiment of the inventive method;
Figure 8 shows a prior art test apparatus.

In the diagrams, like numbers refer to like objects throughout. Objects in the diagrams are not necessarily drawn to scale.

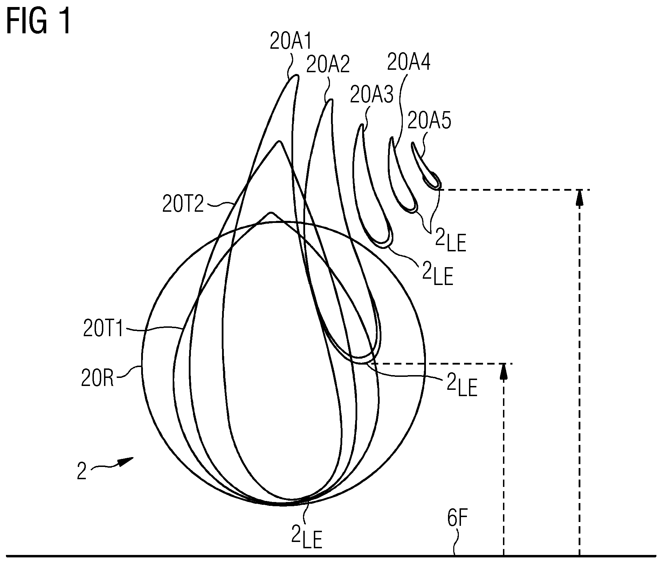

Figure 1 shows a series of outlines 20R - 20A5 to illustrate the progression in cross-sectional shape or "profile" of a rotor blade from its circular root end (indicated by a first outline 20R), through a transition region (indicated by outlines 20T1, 20T2) and airfoil (indicated by outlines 20A1, 20A2, 20A3, 20A4) to its essentially flat outermost tip end, indicated by a final outline 20A5. As indicated here, a long rotor blade can be "pre-bent" in the upwind direction, so that during operation, the tip of the rotor blade 2 does not collide with the wind turbine tower. A "swept" rotor blade may be curved in the rotor plane. Even without such design adaptations, it is generally true that, when held horizontally as indicated here, for example in a manufacturing facility, the lowermost point of the leading edge 2_{LE} (at the junction between pressure side and suction side) moves further away from the floor 6F. The cross-sectional shape of the rotor blade airfoil region alters gradually from the widest and thickest inboard region (profiles 20R, 20T1, 20T2) to the narrowest and flattest tip region (profile 20A5). As a result, the curvature of the leading edge 2_{LE} changes in the span-wise direction of the rotor blade.

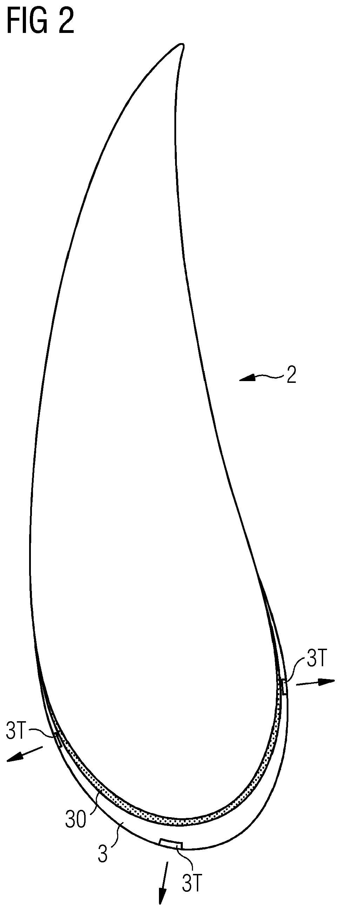

The leading edge 2_{LE} of the rotor blade 2 is protected by an LEP shell bonded to the rotor blade surface by an adhesive layer as shown in Figure 2. It may be desired to pull test strips of the LEP (the "adherent") from the body of the rotor blade 2 in the course of a quality control procedure. Because of the marked curvature of the leading edge region, and the need to pull each adherent strip at a consistent angle, each test strip will require a different orientation of a peel-pull apparatus. This is indicated by the arrows extending at 90° from the surface of the LEP near its long edge on the rotor blade suction side. In addition to different orientations of the test strips, the height of the leading edge (and therefore the height of each test strip) progressively increases with increasing distance from the inboard end of the LEP shell (indicated at profile 20A1) to the outboard end of the LEP (indicated at profile 20A5). The diagram illustrates the relevance of the leading edge shape for a resistance-to-peel test procedure. For example, it may be desired to pull three test strips 3T from different regions of the LEP: one near the long edge of the LEP on the pressure side, one near the long edge of the LEP on the suction side, and one near the centre of the LEP (e.g. over a joint between pressure side and suction side). Each of these test strips 3T has a different orientation in space.

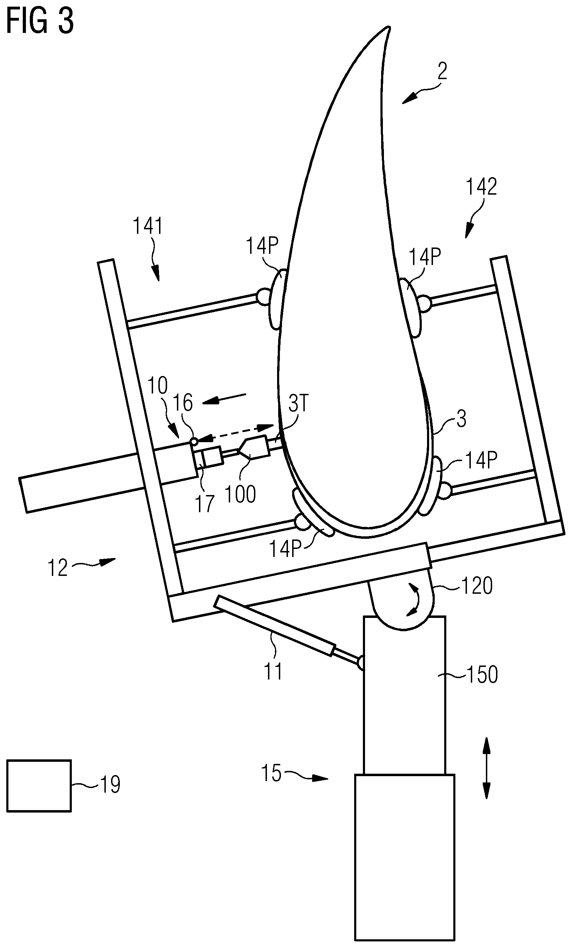

Figure 3 is a simplified schematic of an exemplary embodiment of the inventive testing apparatus 1. The diagram shows a pulling means 10 adapted to pull an adherent strip 3T from a surface of a rotor blade 2. The diagram also indicates a positioning arrangement 11 configured to maintain a predetermined pull angle between an adherent strip 3T and the surface of the rotor blade 2 during a test procedure, and a support frame 12 for holding the pulling means 10 and the positioning arrangement 11. The support frame 13 comprises a clamping arrangement 14 adapted to clamp about the leading edge 2_{LE} of the rotor blade 2.

The support frame 13 can be mounted on a moveable carriage 15 as shown here (an arrangement of wheels, rollers etc. may be assumed), so that an operator can move the test apparatus 1 to a desired location along the length of the rotor blade 2. The carrier is realized as a telescopic device to provide the function of a height adjustment means 150 for the support frame 12. The diagram also shows a tilt angle adjustment means 120. The various parts of the inventive testing apparatus 1 can be any combination of mechanical devices, electronic devices, hydraulic devices etc., and can be actuated in an appropriate order by an operator (not shown), to bring the testing apparatus into a suitable attitude for a subsequent peel-pull procedure. After setting up the testing apparatus 1, the operator can initiate data recording in order to record the relevant information, for example by means of a control unit 19 with data storage e.g. a laptop, a tablet computer, a handheld device etc. During the subsequent peel-pull procedure, data collected by the pulling means 10 (e.g. peel duration, loads measured during that duration) are transmitted over a suitable communications channel to the control unit 16, which can store the data locally and/or upload the data to a remote storage device.

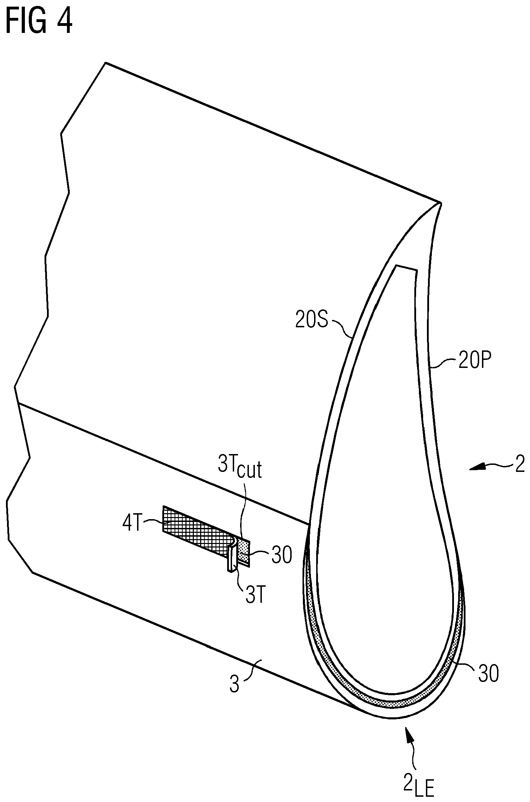

Figure 4 illustrates a preparatory step of the inventive method. The diagram indicates a rotor blade 2, with an LEP shell 3 about its leading edge 2_{LE}, bonded to the surface of the rotor blade 2 by means of an adhesive layer 30. An operator has made incisions 3T_{cut} about the perimeter of a test strip 3T, through the layer thickness of the LEP shell 3, and has exposed a free end of the test strip 3T. In this exemplary embodiment, a strip 4T of non-stretch mesh material has been bonded to the adherent strip 3T, so that the adherent strip 3T will not undergo stretching during the subsequent peel-pull step.

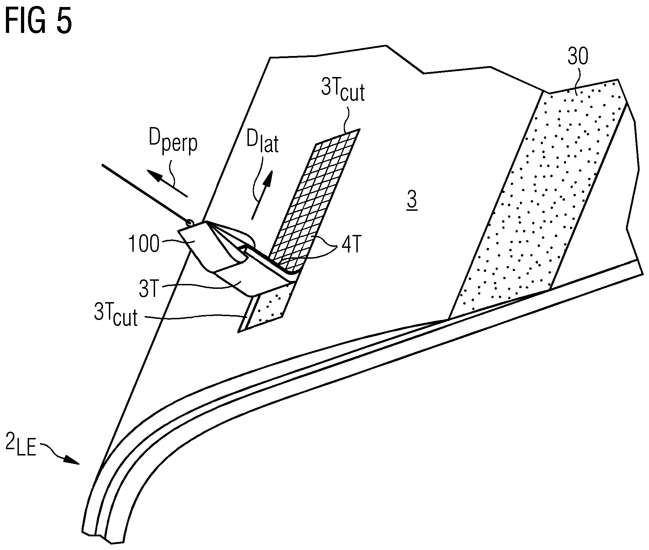

Figure 5 shows the pulling means 10 of the test apparatus of Figure 3 during a peel-pull step. The drawing shows a test strip 3T held at its free end by a gripper 100 of the pulling means 10. The positioning means (not shown) continually adjusts the attitude or orientation of the pulling means 10 to maintain the desired pulling angle of 90° in a direction Dₚₑᵣₚ perpendicular to the rotor blade surface, while moving the pulling means 10 in a sideways direction Dₗₐₜ (the spanwise direction in this exemplary embodiment) at a constant rate. A load sensor 17 (shown in Figure 1) measures the tensile load as the test strip 3T is pulled from the rotor blade 2. The non-stretch mesh material 4T ensures that the adherent strip 3T is not pulled out of shape.

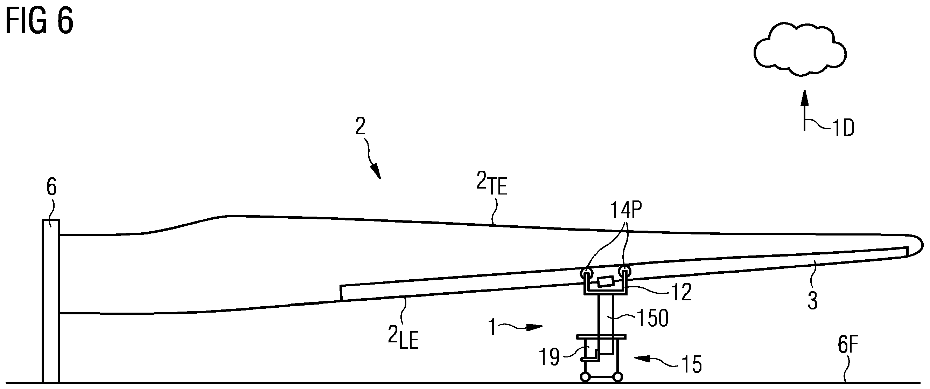

Figure 6 shows an embodiment of the inventive test apparatus 1 in place underneath the leading edge 2_{LE} of a rotor blade 2. The root end of the rotor blade 2 is held in a root end frame 6. The trailing edge 2_{TE} of the rotor blade 1 points upwards. The height of the test apparatus 1 can be adjusted by actuating the relevant parts of the carriage 15 and support frame 12 (tilt adjustment means 120, height adjustment means 150, clamping arrangement 14, etc.) After attaching the gripper of the pulling means to the free end of a test strip as described above, the resistance-to-peel test procedure can be initiated by an operator, for example by entering suitable commands via a user interface of a control unit.

The testing apparatus 1 can be portable, and can be provided with lifting points for a forklift to allow the entire apparats to the deployed outside a factory setting, for example on a platform.

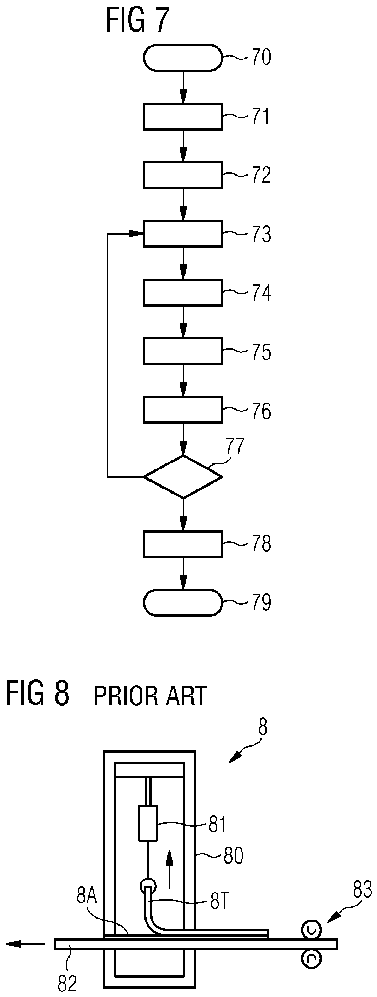

Figure 7 is a flowchart showing steps of the inventive method in an exemplary situation, to perform resistance-to-peel tests on an LEP shell bonded to the leading edge of a wind turbine rotor blade. At the outset of the procedure in step 70, a rotor blade is arranged in a horizontal position and at a height above ground level, with its chord plane at an appropriate angle. For example, the rotor blade may be held with its leading edge facing the ground so that the pressure side and the suction side are essentially "vertical".

In a subsequent step 71, an operator identifies test strips of the LEP shell (the adherent) that are to be removed by pulling. In step 72, the operator isolates each test strip by making incisions about its perimeter, cutting through the LEP shell material but not through the adhesive layer. A short section of end of each adherent strip is prised away from the adhesive layer. Alternatively, the cutting depth can extend through the adhesive layer to the depth of an underlying paint layer, to the depth of an underlying primer layer, to the depth of the laminate, etc. The peel-pull test will then provide useful information about the debonding characteristics of a paint layer, a primer layer etc.

In step 73, the operator places an embodiment of the inventive test apparatus at a suitable location along the rotor blade and, in step 74, actuates the clamping means to attach the support frame securely about the leading edge of the rotor blade. In step 75, the operator inserts the "free" end of an adherent strip into the gripper of the pulling means and then enters appropriate commands via a user interface of the test apparatus to initiate the resistance-to-peel test for that adherent strip. In step 76, the pulling means is actuated to pull the adherent strip until it has been detached from the rotor blade. These steps 73 - 76 are repeated for each test strip.

All relevant measurement data, for example the loads measured during each pulling step, are stored locally and/or exported to a remote server in step 78, and the procedure concludes at step 79.

Figure 8 shows a resistance-to-peel test being performed by a prior art apparatus 8. This apparatus 8 comprises a load measurement unit 81 which can be displaced vertically by a support frame 80. A rectangular strip 8T of a test material is bonded by an adhesive layer 8A to a carrier plate 82 of the apparatus 8. A lateral displacement means 83 moves the carrier plate 82 horizontally at a constant rate, while the load measurement unit 81 pulls the test strip 8T vertically.

Although the present invention has been disclosed in the form of preferred embodiments and variations thereon, it will be understood that numerous additional modifications and variations could be made thereto without departing from the scope of the invention. For example, while the invention is described in the context of performing a resistance-to-peel test of an adherent applied to a wind turbine rotor blade, the inventive test apparatus can be used to perform such a test for an adherent on any complex or curved surface, for example with appropriate adaptation of the support frame and clamping arrangement.

For the sake of clarity, it is to be understood that the use of "a" or "an" throughout this application does not exclude a plurality, and "comprising" does not exclude other steps or elements.

## Claims

1. A testing apparatus (1) for use in a wind turbine rotor blade manufacturing facility, comprising
- a pulling means (10) adapted to pull an adherent strip (3T) from a surface of a rotor blade (2);
- a positioning arrangement (11) configured to maintain a predetermined pull angle (α) between the adherent strip (3T) and the surface of the rotor blade (2) during a test procedure; and
- a support frame (12) for holding the pulling means (10) and positioning arrangement (11), which support frame comprises a clamping arrangement (14) adapted to clamp about the leading edge (2_{LE}) of the rotor blade (2).

2. A testing apparatus according to the preceding claim, wherein the pulling means (10) comprises a gripping means (100) adapted to grip an edge of an adherent strip (3T).

3. A testing apparatus according to any of the preceding claims, wherein the positioning arrangement (11) is configured to maintain a predetermined pull angle (α) of 90°.

4. A testing apparatus according to any of the preceding claims, wherein the positioning arrangement (11) is configured to displace the pulling means (10) in a direction (Dₗₐₜ) essentially parallel to the rotor blade surface during a test procedure.

5. A testing apparatus according to any of the preceding claims, wherein the positioning arrangement (11) is configured to displace the pulling means (10) in a direction (Dₚₑᵣₚ) essentially perpendicular to the rotor blade (2) during a test procedure.

6. A testing apparatus according to any of the preceding claims, comprising a sensor arrangement with any of: a distance sensor (16) to measure a distance between the rotor blade surface and a support frame reference; a load sensor (17) configured to measure the tensile load on an adherent strip (3T) during a pulling procedure.

7. A testing apparatus according to any of the preceding claims, wherein the clamping arrangement (14) comprises a jaw assembly (141, 142) adapted to fit about the rotor blade (2) and to exert a clamping force against opposing surfaces (20P, 20S) of the rotor blade (2).

8. A testing apparatus according to any of the preceding claims, comprising an attitude adjustment means (120) for adjusting the attitude of the support frame (12) according to a profile (20A1, 20A2, 20A3, 20A4, 20A5) at that span-wise position of the rotor blade (2).

9. A testing apparatus according to any of the preceding claims, comprising a height adjustment means (150) for adjusting the height of the testing apparatus (1) according to the height of the rotor blade leading edge (2_{TE}).

10. A testing apparatus according to any of the preceding claims, comprising a control unit (19) configured to record test data (1D).

11. A method of performing a test procedure on a wind turbine rotor blade (2) using the testing apparatus (1) according to any of claims 1 to 10, which method comprises the steps of
- arranging the support frame (12) about the leading edge (2_{LE}) of the rotor blade (2) and actuating the clamping arrangement (14);
- attaching the pulling means (10) to the adherent strip (3T); and
- controlling the positioning arrangement (11) to maintain the predetermined pull angle (α) while actuating the pulling means (10) to pull the adherent strip (3T) from the surface of the rotor blade (2).

12. A method according to the preceding claim, wherein the adherent (3) is a leading edge protector previously bonded to the rotor blade (2) by an adhesive layer (30).

13. A method according to any of the preceding method claims, wherein the step of controlling the positioning arrangement (11) to maintain the predetermined pull angle (α) comprises adjusting the rate of displacement in the direction (Dₗₐₜ) parallel to the rotor blade surface and/or adjusting the rate of displacement in the direction (Dₚₑᵣₚ) perpendicular to the rotor blade surface.

14. A method according to any of the preceding method claims, wherein the step of controlling the positioning arrangement (11) is performed on the basis of data (1D) obtained by sensors (16, 17) of the sensor arrangement.

15. A method according to any of the preceding method claims, comprising a preparatory step of forming incisions (3T_{cut}) about the perimeter of a strip of adherent (3T).

16. A method according to any of the preceding method claims, comprising a step of applying a layer of inelastic material (4T) onto the adherent strip (3T) prior to attaching the pulling means (10) to the adherent strip (3T).

## Patentansprüche

1. Testvorrichtung (1) zur Verwendung in einer Windturbinenrotorblatt-Herstellungsanlage, die Folgendes umfasst:
- Zugmittel (10), die dafür ausgelegt sind, einen Haftstreifen (3T) von einer Oberfläche eines Rotorblatts (2) zu ziehen;
- eine Positionierungsanordnung (11), die konfiguriert ist, einen vorgegebenen Zugwinkel (α) zwischen dem Haftstreifen (3T) und der Oberfläche des Rotorblatts (2) während eines Testverfahrens beizubehalten; und
- einen Tragrahmen (12) zum Halten der Zugmittel (10) und der Positionierungsanordnung (11), wobei der Tragrahmen eine Klemmanordnung (14) umfasst, die dafür ausgelegt ist, um die Vorderkante (2LE) des Rotorblatts (2) herum festgeklemmt zu werden.

2. Testvorrichtung nach dem vorhergehenden Anspruch, wobei die Zugmittel (10) Greifmittel (100) umfassen, die dafür ausgelegt sind, eine Kante eines Haftstreifens (3T) zu ergreifen.

3. Testvorrichtung nach einem der vorhergehenden Ansprüche, wobei die Positionierungsanordnung (11) konfiguriert ist, einen vorgegebenen Zugwinkel (α) von 90 ° beizubehalten.

4. Testvorrichtung nach einem der vorhergehenden Ansprüche, wobei die Positionierungsanordnung (11) konfiguriert ist, die Zugmittel (10) während eines Testverfahrens in einer Richtung (Dₗₐₜ) zu versetzen, die im Wesentlichen parallel zu der Rotorblattoberfläche ist.

5. Testvorrichtung nach einem der vorhergehenden Ansprüche, wobei die Positionierungsanordnung (11) konfiguriert ist, die Zugmittel (10) während eines Testverfahrens in einer Richtung (Dₚₑᵣₚ) zu versetzen, die im Wesentlichen senkrecht zu dem Rotorblatt (2) ist.

6. Testvorrichtung nach einem der vorhergehenden Ansprüche, die ferner eine Sensoranordnung mit einem der folgenden Elemente umfasst: einem Abstandssensor (16), um einen Abstand zwischen der Rotorblattoberfläche und einer Tragrahmenreferenz zu messen; und einem Lastsensor (17), der konfiguriert ist, die Zuglast auf einem Haftstreifen (3T) während eines Zugverfahrens zu messen.

7. Testvorrichtung nach einem der vorhergehenden Ansprüche, wobei die Klemmanordnung (14) eine Backenbaugruppe (141, 142) umfasst, die dafür ausgelegt ist, um das Rotorblatt (2) herum angebracht zu werden und eine Klemmkraft auf gegenüberliegende Oberflächen (20P, 20S) des Rotorblatts (2) auszuüben.

8. Testvorrichtung nach einem der vorhergehenden Ansprüche, die Mittel (120) zur Lageeinstellung zum Einstellen der Lage des Tragrahmens (12) entsprechend einem Profil (20A1, 20A2, 20A3, 20A4, 20A5) an dieser Spannweitenposition des Rotorblatts (2) umfasst.

9. Testvorrichtung nach einem der vorhergehenden Ansprüche, die Höheneinstellmittel (150) zum Einstellen der Höhe der Testvorrichtung (1) entsprechend der Höhe der Vorderkante (2_{TE}) des Rotorblatts umfasst.

10. Testvorrichtung nach einem der vorhergehenden Ansprüche, die eine Steuereinheit (19) umfasst, die konfiguriert ist, Testdaten (1D) aufzuzeichnen.

11. Verfahren zum Durchführen eines Testverfahrens auf einem Windturbinen-Rotorblatt (2) unter Verwendung der Testvorrichtung (1) nach einem der Ansprüche 1 bis 10, wobei das Verfahren die folgenden Schritte umfasst:
- Anordnen des Tragrahmens (12) um die Vorderkante (2LE) des Rotorblatts (2) und Betätigen der Klemmanordnung (14);
- Befestigen der Zugmittel (10) an dem Haftstreifen (3T); und
- Steuern der Positionierungsanordnung (11), um den vorgegebenen Zugwinkel (α) während des Betätigens der Zugmittel (10) beizubehalten, um den Haftstreifen (3T) von der Oberfläche des Rotorblatts (2) abzuziehen.

12. Verfahren nach dem vorhergehenden Anspruch, wobei das Haftmittel (3) ein Vorderkantenschutz ist, der vorher durch eine Haftschicht (30) mit dem Rotorblatt (2) verbunden worden ist.

13. Verfahren nach einem der vorhergehenden Verfahrensansprüche, wobei der Schritt des Steuerns der Positionierungsanordnung (11), um den vorgegebenen Zugwinkel (α) beizubehalten, das Einstellen der Versetzungsrate in der Richtung (Dₗₐₜ) parallel zu der Rotorblattoberfläche und/oder das Einstellen der Versetzungsrate in der Richtung (Dₚₑᵣₚ) senkrecht zu der Rotorblattoberfläche umfasst.

14. Verfahren nach einem der vorhergehenden Verfahrensansprüche, wobei der Schritt des Steuerns der Positionierungsanordnung (11) auf der Grundlage von Daten (1D), die durch Sensoren (16, 17) der Sensoranordnung gewonnen worden sind, durchgeführt wird.

15. Verfahren nach einem der vorhergehenden Verfahrensansprüche, das einen Vorbereitungsschritt des Bildens von Einschnitten (3T_{cut}) um den Umfang eines Haftstreifens (3T) herum umfasst.

16. Verfahren nach einem der vorhergehenden Verfahrensansprüche, das vor dem Befestigen der Zugmittel (10) auf dem Haftstreifen (3T) einen Schritt des Aufbringens einer Schicht inelastischen Materials (4T) auf den Haftstreifen (3T) umfasst.

## Revendications

1. Appareil de test (1) pour une utilisation dans une installation de fabrication de pales de rotor d'éolienne, comprenant
- un moyen de traction (10) adapté pour tirer une bande adhérente (3T) d'une surface d'une pale de rotor (2) ;
- un agencement de positionnement (11) configuré pour conserver un angle de traction prédéterminé (α) entre la bande adhérente (3T) et la surface de la pale de rotor (2) pendant une procédure de test ; et
- un cadre de support (12) pour maintenir le moyen de traction (10) et l'agencement de positionnement (11), lequel cadre de support comprend un agencement de serrage (14) adapté pour serrer le bord d'attaque (2_{LE}) de la pale de rotor (2).

2. Appareil de test selon la revendication précédente, dans lequel le moyen de traction (10) comprend un moyen de préhension (100) adapté pour saisir un bord d'une bande adhérente (3T).

3. Appareil de test selon l'une des revendications précédentes, dans lequel l'agencement de positionnement (11) est configuré pour conserver un angle de traction prédéterminé (α) de 90°.

4. Appareil de test selon l'une des revendications précédentes, dans lequel l'agencement de positionnement (11) est configuré pour déplacer le moyen de traction (10) dans une direction (Dₗₐₜ) essentiellement parallèle à la surface de pale de rotor pendant une procédure de test.

5. Appareil de test selon l'une des revendications précédentes, dans lequel l'agencement de positionnement (11) est configuré pour déplacer le moyen de traction (10) dans une direction (Dₚₑᵣₚ) essentiellement perpendiculaire à la pale de rotor (2) pendant une procédure de test.

6. Appareil de test selon l'une des revendications précédentes, comprenant un agencement de capteurs avec l'un parmi : un capteur de distance (16) pour mesurer une distance entre la surface de pale de rotor et une référence de cadre de support ; un capteur de charge (17) configuré pour mesurer la charge de traction sur une bande adhérente (3T) pendant une procédure de traction.

7. Appareil de test selon l'une des revendications précédentes, dans lequel l'agencement de serrage (14) comprend un ensemble de mâchoires (141, 142) adapté pour s'ajuster autour de la pale de rotor (2) et pour exercer une force de serrage contre les surfaces opposées (20P, 20S) de la pale de rotor (2).

8. Appareil de test selon l'une des revendications précédentes, comprenant un moyen de réglage d'attitude (120) pour régler l'attitude du cadre de support (12) selon un profil (20A1, 20A2, 20A3, 20A4, 20A5) à cette position dans le sens de l'envergure de la pale de rotor (2).

9. Appareil de test selon l'une des revendications précédentes, comprenant un moyen de réglage de hauteur (150) pour régler la hauteur de l'appareil de test (1) en fonction de la hauteur du bord d'attaque de pale de rotor (2_{TE}).

10. Appareil de test selon l'une des revendications précédentes, comprenant une unité de commande (19) configurée pour enregistrer des données de test (1D).

11. Procédé pour effectuer une procédure de test sur une pale de rotor d'éolienne (2) en utilisant l'appareil de test (1) selon l'une des revendications 1 à 10, lequel procédé comprend les étapes de
- agencement du cadre de support (12) autour du bord d'attaque (2_{LE}) de la pale de rotor (2) et actionnement de l'agencement de serrage (14) ;
- fixation du moyen de traction (10) à la bande adhérente (3T) ; et
- commande de l'agencement de positionnement (11) pour conserver l'angle de traction prédéterminé (α) tout en actionnant le moyen de traction (10) pour tirer la bande adhérente (3T) de la surface de la pale de rotor (2).

12. Procédé selon la revendication précédente, dans lequel l'élément adhérent (3) est un protecteur de bord d'attaque préalablement collé à la pale de rotor (2) par une couche adhésive (30).

13. Procédé selon l'une des revendications précédentes, dans lequel l'étape de commande de l'agencement de positionnement (11) pour conserver l'angle de traction prédéterminé (α) comprend le réglage de la vitesse de déplacement dans la direction (Dₗₐₜ) parallèle à la surface de pale de rotor et/ou le réglage de la vitesse de déplacement dans la direction (Dₚₑᵣₚ) perpendiculaire à la surface de pale de rotor.

14. Procédé selon l'une des revendications de procédé précédentes, dans lequel l'étape de commande de l'agencement de positionnement (11) est effectuée sur la base de données (1D) obtenues par des capteurs (16, 17) de l'agencement de capteurs.

15. Procédé selon l'une des revendications de procédé précédentes, comprenant une étape préparatoire de formation d'incisions (3T_{cut}) autour du périmètre d'une bande adhérente (3T).

16. Procédé selon l'une des revendications de procédé précédentes, comprenant une étape d'application d'une couche de matériau inélastique (4T) sur la bande adhérente (3T) avant de fixer le moyen de traction (10) à la bande adhérente (3T).
